# EUROPÄISCHE PATENTSCHRIFT

(11) **EP 2 219 924 B1**
(45) Veröffentlichungstag und Bekanntmachung des Hinweises auf die Patenterteilung: **02.01.2013**
(21) Anmeldenummer: 08805255.0
(22) Anmeldetag: 13.10.2008
(51) Int. Cl.: G08G 1/0967, B60W 50/14, G06T 5/00, G08G 1/16, G11B 31/00, B60W 30/08, B60W 40/02

(54) **FAHRERASSISTENZSYSTEM ZUR ÜBERWACHUNG DER FAHRSICHERHEIT UND KORRESPONDIERENDES VERFAHREN ZUR ERFASSUNG UND BEWERTUNG EINER FAHRZEUGBEWEGUNG**
DRIVER ASSISTANCE SYSTEM FOR MONITORING DRIVING SAFETY AND CORRESPONDING METHOD FOR DETECTING AND ASSESSING THE MOVEMENT OF A VEHICLE
SYSTEME D'ASSISTANCE A LA CONDUITE POUR SURVEILLER LA SECURITE DE CONDUITE, ET PROCEDE CORRESPONDANT POUR ENREGISTRER ET EVALUER UN DEPLACEMENT DU VEHICULE

(30) Priorität: 06.12.2007 DE 102007058542
(43) Veröffentlichungstag der Anmeldung: 25.08.2010
(73) Patentinhaber: Robert Bosch GmbH, 70442 Stuttgart (DE)
(72) Erfinder: MATHONY, Hans-Joerg, 71732 Tamm-hohenstange (DE); KASSNER, Uwe, 71696 Moeglingen (DE)
(86) Internationale Anmeldenummer: PCT/EP2008/063728
(87) Internationale Veröffentlichungsnummer: WO 2009/071365

(56) Entgegenhaltungen:
- EP-A- 1 643 769
- JP-A- 8 202 999
- US-A1- 2006 075 422

## Beschreibung

Die Erfindung betrifft ein Fahrerassistenzsystem zur Überwachung der Fahrsicherheit, aufweisend eine mobile elektronische Einheit mit Videosensor, Rechnereinheit zur Bilddatenverarbeitung und akustischer Ausgabeeinheit, welche die unmittelbare Fahrzeugumgebung aus Daten des Videosensors erfasst und eine Warnung oder einen Hinweis über eine Ausgabeeinheit ausgibt, wenn die Rechnereinheit eine Gefahrensituation detektiert und ein korrespondierendes Verfahren zum Erfassen und Bewerten einer Fahrzeugbewegung.

### STAND DER TECHNIK

Zur aktiven Unterstützung des Fahrers eines Fahrzeuges in unterschiedlichen Verkehrssituationen sind automatische Fahrerassistenzsysteme bekannt, die dem Fahrer bei der Navigation durch den Straßenverkehr nützliche Hinweise geben. Daneben sind aus der DE 199 82 422 und aus der EP 1826736 A1 Systeme zur Erkennung von Straßenschildern bekannt, die dem Fahrer helfen, sich in unübersichtlichen Verkehrssituationen sicher zu bewegen. Neben den bekannten Navigationssystemen, die satellitengestützte Navigationsdaten anzeigen, sind Fahrerassistenzsysteme bekannt, die den Fahrer bei der Einhaltung der Spur durch akustische Signale helfen und dadurch dem Fahrer Wamhinweise geben, beispielsweise, um Ermüdung zu erkennen und dadurch Unfälle zu vermeiden. Da solche Systeme in der Regel kostenaufwändig sind und größtenteils erst in Neufahrzeugen zum Einsatz kommen, wird in der DE 10 2005 049 881 A1 vorgeschlagen, diese Systeme durch mobile Telefone zu ersetzen, die zum Zeitpunkt dieser Anmeldung zu einem großen Anteil über eine leistungsfähige Kamera mit ebenso leistungsfähiger Rechnereinheit zur Bearbeitung der Kamerabilder verfügen. Nach der zuletzt genannten Druckschrift soll die Spurerkennungsfunktion softwareseitig in ein Mobiltelefon eingebracht werden, wobei das in einer Montierschale auf dem Armaturenbrett positionierte Mobiltelefon bei erkannter Annäherung an einen Spurwechsel einen Wamton über die Klingelfunktion des Mobiltelefons ausgibt. Durch die hohe Reflektierfähigkeit der meisten Straßenmarkierungen ist die Erkennung eines Spurwechsels mit relativ hoher Zuverlässigkeit möglich, da die durch die starke Reflexion erzeugten starken Kontraste eine automatische Erkennung der Straßenmarkierung in Bilddaten unterstützen. Nachteilig an dem oben genannten Verfahren ist aber eine recht einseitige und undifferenzierte Erkennung eines Spurwechsels, die zu einem häufigen und auch unnötigen Alarm führt. Die Folge davon ist, dass der Fahrer das System aufgrund der hohen Anzahl von unnötig abgegebenen Warnungen ausschaltet oder schlicht nicht beachtet.

Das Dokument JP 08 202 999 A entsprichst dem naheliegenden Stand der Technik und offenbart die Merkmale des Oberbegriffs des Anspruchs 1.

### OFFENBARUNG DER ERFINDUNG

Die Erfindung stellt ein Fahrerassistenzsystem zur Überwachung der Fahrsicherheit zur Verfügung, das differenzierter Abweichungen detektieren kann als bekannte Fahrerassistenzsysteme, die auf einer mobilen elektronischen Einheit basieren. Dies wird dadurch erreicht, dass die mobile elektronische Einheit über eine akustische Eingabeeinheit akustische Signale erfasst und diese Signale bei der Beurteilung der Fahrsicherheit einbezieht. Weitere vorteilhafte Ausgestaltungen der Erfindung werden in den Unteransprüchen angegeben.

Als mobile elektronische Einheit kommen eine inzwischen breite Auswahl von elektronischen Kleingeräten in Betracht, wie beispielsweise Mobiltelefone, persönliche elektronische Assistenten (PDA) mit Digitalkamera, digitale Musikabspielgeräte (mp3-Spieler mit Digitalkamera), Miniatur-Videokameras oder Digitalkameras, aber auch persönliche Navigationsgeräte, sog. Personal Navigation Devices (PND), welche zur Steuerung bereits eine integrierte Spracherkennung aufweisen sowie tragbare Kleinstcomputer, wobei sich die Anzahl der Geräte, die über einen Videosensor verfügen, derzeit ständig erhöht.

Erfindungsgemäß wird vorgeschlagen, dass die mobile elektronische Einheit weitere Signale aus der Umgebung erfasst, um die Beurteilung der Abweichung von einer Verkehrsordnung zu differenzieren. Im Gegensatz zu fest montierten Fahrerassistenzsystemen, die Zugriff auf eine große Anzahl von Daten aus dem elektronischen BUS-System eines Fahrzeuges haben, ist diese Informationsvielfalt den verfügbaren mobilen elektronischen Einheiten nicht zugänglich. Dennoch kann beispielsweise die akustische Umgebung der mobilen elektronischen Einheit wertvolle Informationen zur weiteren, differenzierten Beurteilung einer gefährlichen Situation im Straßenverkehr geben. Durch den Einbezug weiterer Daten, insbesonderer akustischer Informationen, kann in vorteilhafter und wünschenswerter Weise die Anzahl der Fehlalarme reduziert werden.

Der Vorteil der Verwendung von akustischen Signalen ist auch, dass zur Blinkererkennung keine drahtgebundene Verbindung mit dem Systembus des Fahrzeuges notwendig ist, was für eine erhöhte Akzeptanz beim Benutzer führt, da nicht in die Funktion des Fahrzeuges eingegriffen wird, was nicht nur kostenaufwändig ist, sondern auch noch die Gefahr einer unzulässigen Funktion des Fahrzeuges nach Eingriff nach sich zieht. Die akustische statt drahtgebundener Verbindung bietet somit eine Ver-L besserung der Erkennungsfunktion und gleichzeitig bietet sie eine Erhöhung der Akzeptanz bei den Benutzern.

In erster Ausgestaltung der Erfindung ist vorgesehen, dass die mobile elektronische Einheit in einem Lernmodus akustische Begleitgeräusche erfasst und diese bestimmten, vorgewählten Ereignissen zuordnet.

In konkreter Ausgestaltung ist vorgesehen, dass das typische klickende Geräusch eines Blinkers im Fahrzeug von der mobilen elektronischen Einheit erfasst und zum Trainieren eines programmtechnisch umgesetzten akustischen Filters verwendet wird. Sobald die mobile elektronische Einheit nach Beendigung des Lernmodus das Klicken eines Blinkers aus der Überlagerung von Fahrgeräuschen und gegebenenfalls Musik im Auto herausfiltert, wird ein internes Signal ausgelöst, das bei einem von der mobilen elektronischen Einheit detektierten Spurwechsel die Warnfunktion unterdrückt. Dies hat den Vorteil, dass beabsichtigte Spurwechsel nicht zu einem Fehlalarm führen, weil davon ausgegangen werden kann, dass in diesem Fall der Spurwechsel nicht unbeabsichtigt aufgrund einer Ermüdung des Fahrers vorgenommen wird. Der Lernmodus kann bei der erstmaligen Nutzung des Fahrerassistenzsystems aktiviert werden, wobei die meist schon vorhandene Spracherkennungsfunktion dazu genutzt wird, das Geräusch des Blinkgebers sicher zu erkennen. Dabei ist es auch möglich, den Lernmodus bei verschiedenen Geschwindigkeiten zu aktivieren, um dem Spracherkennungsystem eine differenzierte und damit sichere Erkennung des Blinkergeräusches zu ermöglichen. Das bei der Inbetriebnahme im Lernmodus erfasste Blinkergeräusch wird so dann abgespeichert und steht fortan dem System zur Blinkererkennung zur Verfügung.

In weiterer Ausgestaltung der Erfindung lernt die mobile elektronische Einheit nicht nur das Blinkergeräusch, sondern auch noch weitere typische Fahrgeräusche, wie Motorgeräusch, aus dem die Drehzahl des Motors und daher die Geschwindigkeit des Fahrzeuges ableitbar ist, weitere Hinweis- und/oder Wamgeräusche des Fahrzeuges selbst, wie akustische Näherungssignale eines Fahrzeuges aus einer radargestützten Abstandskontrolle oder Warnhinweise einer Geschwindigkeitskontrolle, Hupgeräusche des eigenen oder von anderen Fahrzeugen, sowie Martinshörner. Aus der Detektion eines Martinshorns kann beispielsweise die Anweisung erfolgen, sich innerhalb der rechten Spur rechts zu halten oder innerhalb der linken Spur links zu halten. Ebenso ist es möglich, dem Fahrer zu signalisieren, die Geschwindigkeit zu drosseln.

Durch die erfindungsgemäße zusätzliche akustische Erfassung kann somit die Fahrerassistenzfunktion erheblich verbessert werden, weil das System dazu in der Lage ist, erkannte Abweichungen durch weitere Parameter zu relativieren und dadurch die Anzahl der Fehlalarme zu verringern.

In weiterer Ausgestaltung der Erfindung erkennt das System Straßenverkehrsschilder, insbesondere Geschwindigkeitsbegrenzungen und deren Aufhebung und signalisiert die erkannten Begrenzungen und Aufhebungen durch akustische und/oder optische Signale. Ebenso ist es möglich, die Bedeutung des erkannten Verkehrsschildes durch natürliche Sprache auszugeben, so dass der Fahrer, sollte er das Schild übersehen haben, akustisch sprachlich darauf hingewiesen wird. Aus den bewegten Bildern der eingebauten Kamera kann die mobile elektronische Einheit aber noch weitere Daten ermitteln und diese in die Beurteilung der Abweichung von der Verkehrsordnung einbeziehen.

Neben der Ermittlung der Fahrzeuggeschwindigkeit ist es auch möglich, anhand der Geschwindigkeit vorbeiziehender Objekte, wie eben Straßenschilder oder Fahrbahnmarkierungen auf die aktuelle Geschwindigkeit zu schließen. Von Vorteil ist hier die typische Verzerrung des Bildes durch die Zentralprojektion und durch die typischerweise kurze Brennweite der meisten elektronischen Geräte in Verbindung mit einer häufig weniger hochwertigen Optik. Dadurch werden Objekte in Abhängigkeit von der Entfernung verzerrt und erkannte Punkte mit hohem Kontrast, beispielsweise in Straßenschildern, oder Ecken einer Fahrbahnmarkierung folgen aufgrund der oben genannten Ursachen typischen Trajektorien auf der Bildfläche, die von einer Geraden abweichen. Durch die markanten Abweichungen und die in der Regel nicht konstante Geschwindigkeit zu den Bildrändern und -ecken kann somit auf die Geschwindigkeit des vorbeiziehenden Objekt geschlossen werden, wobei die Objektentfernung durch die Verzerrungen ermittelt werden kann. Zusätzlich kann die mobile elektronische Einheit trainiert werden, in dem bei einer konstanten Geschwindigkeit ein Lernmodus aktiviert wird.

Auch können weitere Details der Fahrzeugumgebung in die Beurteilung einfließen, wie die Relativgeschwindigkeit gegenüber anderen Fahrzeugen. Des Weitern können auffällig langsame oder plötzlich ausscherende Fahrzeuge erkannt und durch akkustisch und/oder optische Warnung angezeigt werden. In häufigen Fällen ist ein Fahrer vom Verkehr abgelenkt und nimmt somit auch vergängliche akustische Hinweise nicht wahr, daher ist es von Vorteil, wenn die jeweils letzte akustische Warnung oder Hinweis optisch auf einer Anzeige visualisiert wird, beispielsweise durch Anzeige des zuletzt erkannten Straßenschildes.

In besonderer Ausgestaltung der Erfindung weist die mobile elektronische Einheit Mittel zur Navigation auf und zieht die daraus gewonnene Information in die Beurteilung zur Abweichung von der Verkehrsordnung mit ein, beispielsweise um zu erkennen, auf welchem Straßentyp sich das Fahrzeug befindet, also Autobahn oder Landstraße oder ob sich das Fahrzeug im öffentlichen oder nicht öffentlichen Raum befindet.

Um zu verhindern, dass das Fahrerassistenzsystem nicht ausgeschaltet oder vom Fahrer ignoriert wird, ist es vorteilhaft, wenn erkannte Gefahrsituationen in mehr als eine Klasse eingeteilt werden. Hierdurch kann der Fahrer zwischen verschieden Betriebsmodi wählen, beispielsweise in einen wortreichen und sehr vorsichtigen Modus oder in einen Modus, der erst bei höherem Gefährdungspotential ein Warn- und/oder Hinweissignal aktiviert.

In weiterer Ausgestaltung der Erfindung ist es möglich, die detektierten Abweichungen und vom Fahrerassistenzsystem statistisch auszuwerten. Hierdurch kann der Fahrer seine eigene Fahrsicherheit abschätzen oder angenommene Gewohnheitsfahrfehler ablegen. Auch ist es möglich, hierdurch den Sicherheitsgrad eines Fahranfängers abzuschätzen, wobei ein Sinken der vom System erkannten gefährlichen Situationen eine Verbesserung der eigenen Fahrsicherheit indiziert.

In besonderer Ausgestaltung der Erfindung ist vorgesehen, dass das System Infrarotstrahlung, insbesondere in Form von kleinen Punkten, in dem Bild erkennt und gleichzeitig die Geschwindigkeit erfasst. Ein kleiner und intensiver Punkt in dem Bild einer mobile elektronische Einheit deutet auf die Erfassung des eigenen Fahrzeuges durch einen Infrarotlaser hin, wobei die meisten Videosensoren mobiler elektronischer Einheiten empfindlich gegenüber der für das menschliche Auge unsichtbarennahen Infrarotstrahlung sind. Die Erfassung durch einen Infrarotlaser wiederum indiziert eine Geschwindigkeitsmessung durch die Polizei, so dass der Fahrer sofort darüber informiert wird, ob eine Geschwindigkeitserfassung vorliegt oder nicht.

### KURZE BESCHREIBUNG DER ZEICHNUNGEN

Die Erfindung wird anhand der beiliegenden Figuren näher erläutert.

Es zeigen:
- Figur 1: ein erfindungsgemäßes Fahrerassistenzsystem im Einsatz,
- Figur 2: ein Blockschaltbild eines erfindungsgemäßen Fahrerassistenzsystems in einer ersten Ausführungsvariante,
- Figur 3: ein Blockschaltbild eines erfindungsgemäßen Fahrerassistenzsystems in einer weiteren Ausführungsvariante,
- Figur 4: eine Skizze zur Verdeutlichung der Geschwindigkeitserfassung aus Videodaten
- Figur 5: ein Ablaufdiagramm des erfindungsgemäßen Verfahrens

### AUSFÜHRUNGSBEISPIELE

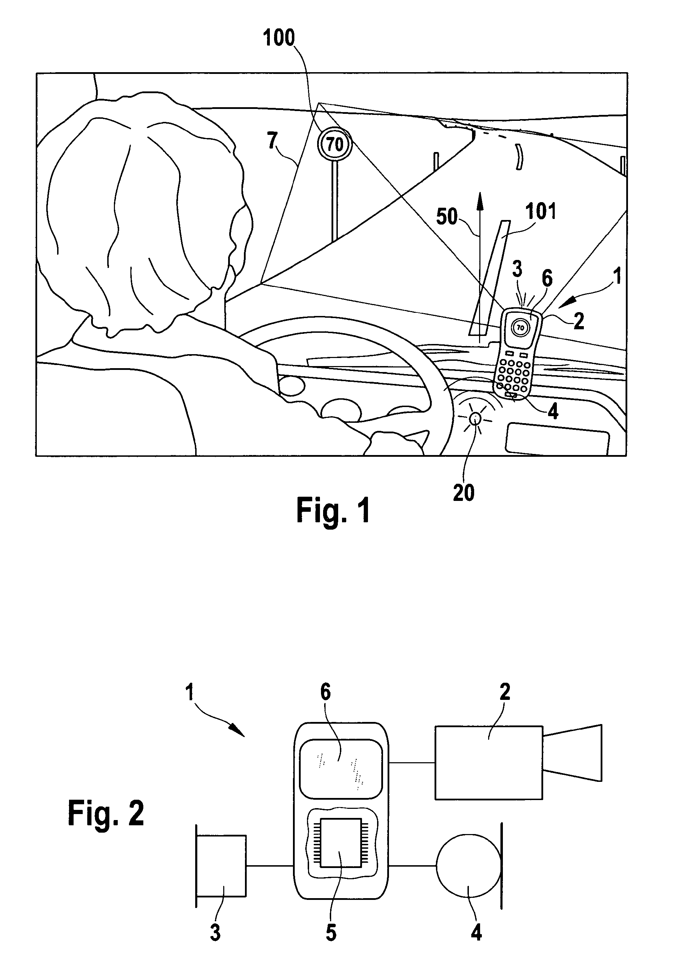

In Figur 1 ist ein erfindungsgemäßes Fahrerassistenzsystem im Einsatz in einer Fahrerkabine eines LKWs dargestellt, wobei das Fahrerassistenzsystem nicht auf die Verwendung in LKWs beschränkt ist. Das Fahrerassistenzsystem ist hier umgesetzt durch ein Mobiltelefon als mobile elektronische Einheit 1, das rückseitig in Fahrtrichtung einen Videosensor 2 aufweist. Die akustische Ausgabeeinheit 3 ist in Form des Lautsprechers des Mobiltelefons umgesetzt, der im Normalfall zur Ausgabe von Musik oder polyphonen Klingeltönen verwendet wird. Als akustische Eingabeeinheit 4 dient das Sprachmikrophon oder, sofern vorhanden, ein Mikrophon zur Aufnahme von Geräuschen und Sprache bei Videoaufzeichnung. Im Einsatz wird das Mobiltelefon an einer Haltevorrichtung auf dem Armaturenbrett installiert, so dass das Mobiltelefon mit dem Videosensor 2 in Fahrtrichtung ausgerichtet ist, welcher den optischen Erfassungswinkel 7 aufweist, durch den der Videosensor 2 am Straßenrand befindliche Straßenschilder 100 und/oder Mittellinien 101 erfassen kann. Sofern ein Spurwechsel 50 vom Fahrerassistenzsystem detektiert wird, erfasst das Fahrerassistenzsystem akustische Signale aus der Fahrerkabine, wie beispielsweise das klickende Geräusch einer Blinkeranzeige 20 und gibt nur dann einen Alarm aus, wenn ein Spurwechsel 50 erkannt, aber gleichzeitig kein Blinkergeräusch aufgenommen wird. Das akustische Signal des Blinkeranzeige 20 unterdrückt also die Warnung vor einem Spurwechsel 50. Zusätzlich zur Erfassung eines Spurwechsels 50 erfasst das hier skizzierte Fahrerassistenzsystem noch ein links am Straßenrand befindliches Straßenschild 100, erkennt die Bedeutung und zeigt das Straßenschild 100 in einer optischen Anzeigeeinheit 6, hier in dem Display des Mobiltelefons, an und gibt zusätzlich die Bedeutung des erkannten Straßenschildes 100 in natürlicher Sprache über die akustische Ausgabeeinheit 3, hier dem Lautsprecher des Mobiltelefons, aus.

In Figur 2 sind die einzelnen Elemente 2, 3, 4, 5 und 6 einer allgemeinen mobilen elektronischen Einheit 1 in einem Blockschaltbild dargestellt, wobei diese Einheit 1 eine Videokamera, eine Digitalkamera, ein Mobiltelefon, ein digitaler Musikabspieler, ein Kleincomputer oder ein persönlicher digitaler Assistent (PDA) oder auch ein anderes mobiles Kleingerät mit elektronischen Komponenten sein kann. Die mobile elektronische Einheit 1 weist einen Videosensor 2, eine akustische Ausgabeeinheit 3, eine akustische Eingabeeinheit 4, eine Rechnereinheit 5 zur Bildberechnung und optional eine optische Anzeigeeinheit 6 auf.

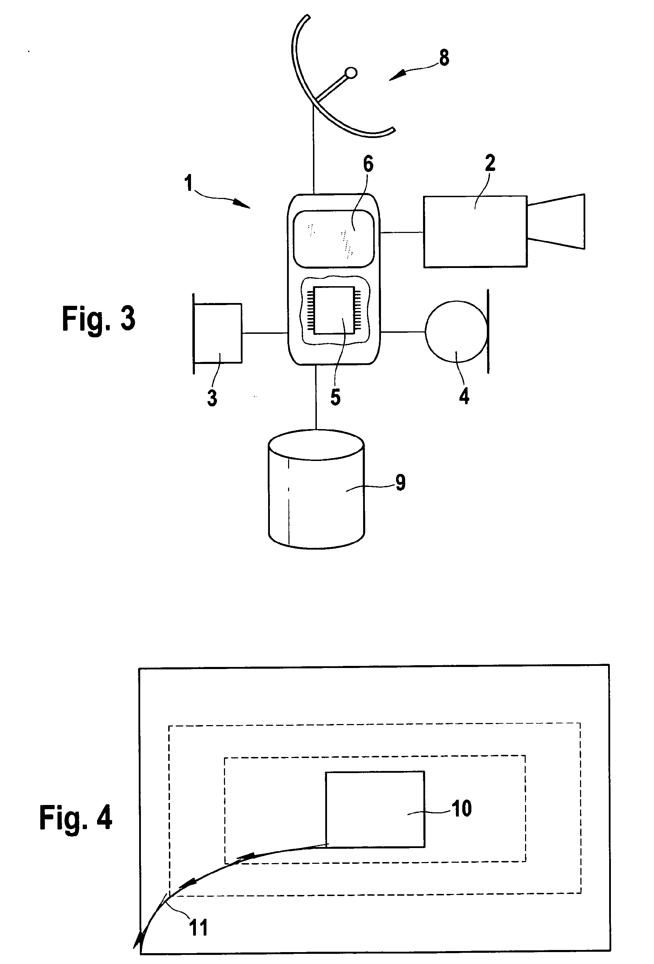

In Figur 3 ist die allgemeine mobile elektronische Einheilt 1 erweitert um eine Antenne 8 zum Empfang von Navigationsdaten und einer Datenbank 9 zum Abgleich der Navigationsdaten mit einer intern repräsentierten digitalen Landkarte. Ein mit Mitteln 8 und 9 zur Navigation ausgerüstetes Kleingerät erfasst die augenblickliche Verkehrssituation und gleicht die erkannte Situation mit Daten in der Datenbank 9 und den Navigationsdaten ab und erkennt daran, ob eine Geschwindigkeitsbegrenzung vorliegt, beispielsweise, weil das Fahrerassistenzsystem in einem Fahrzeug auf einer Landstrasse eingesetzt wird.

In Figur 4 ist skizziert, wie in besonderer Ausgestaltung der Erfindung, das Fahrerassistenzsystem die aktuelle Geschwindigkeit erkennt, in dem es ein Objekt 10 im Bild erkennt und dessen linke untere Ecke der eingezeichneten Trajektorie 11 folgt. Aus der Art der Trajektorie 11, die für jeden Abstand des Objektes 10 vom Videosensor unterschiedlich ist, schließt das Fahrerassistenzsystem auf den tatsächlichen Abstand und durch die Zeit, die das Objekt 10 für die Trajektorie 11 benötigt, schließt das Fahrerassistenzsystem auf die aktuelle Geschwindigkeit. Die ermittelte Geschwindigkeit wird sodann mit der Bedeutung eines erkannten Straßenschildes verglichen und im Fall, dass die ermittelte Geschwindigkeit über einer erkannten Geschwindigkeitsbegrenzung liegt, wird ein akustischer Alarm ausgegeben. Das erkannte Objekt kann eine Mittellinie oder ein Straßenschild sein, die beide ortsfest sind oder auch ein anderes Fahrzeug, wobei in diesem Fall die Relativgeschwindigkeit des eigenen Fahrzeuges gegenüber dem fremden Fahrzeug ermittelt wird.

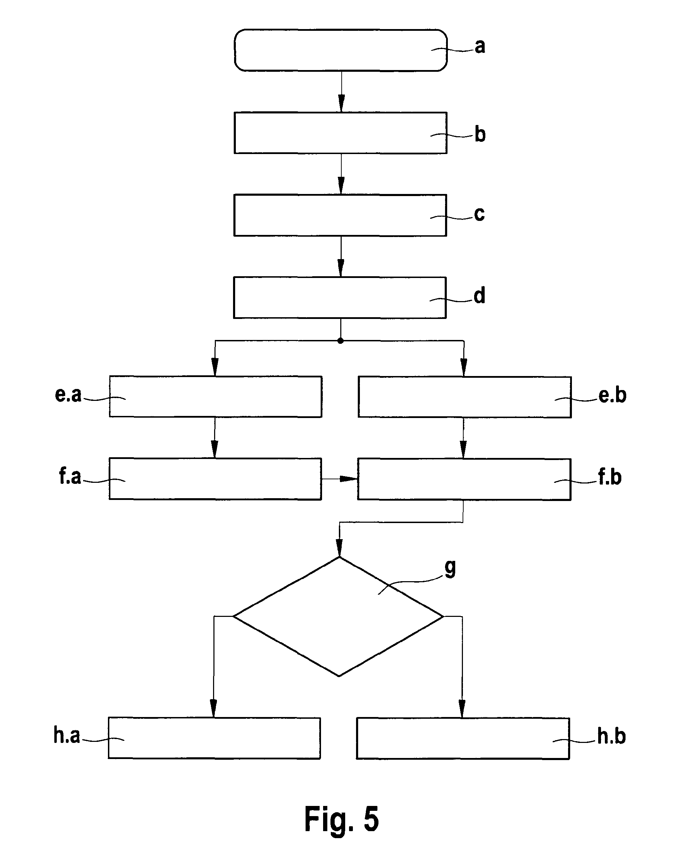

In Figur 5 ist in einem Ablaufdiagramm dargstellt, welche Schritte das Verfahren zum automatischen Erfassen und Bewerten einer Fahrzeugbewegung, das in vorteilhafter Weise durch ein Programm in einer mobilen elektronischen Einheit umgesetzt wird, umfasst. Der erste Schritt a beinhaltet das Aufnehmen von Videodaten aus dem sch bewegenden Fahrzeug, diesem Schritt a folgt Schritt b, welcher das Erkennen der von vorgewählten kontrastreichen Objekten, wie Straßenschilder und Fahrbahnmarkierungen umfasst. Darauf folgt ein Vergleichen der Bewegungen mit vorausberechneten Bewegungen in Schritt c, und in Schritt d folgt das Erkennen von Unterschieden zwischen den vorausberechneten Bewegungen und den erfassten Bewegungen. Parallel zu Erfassen von akustischen Signalen aus der unmittelbaren Fahrzeugumgebung und/oder dem Fahrzeuginneren in Schritt e.a, folgt das Bewerten der erfassten Bewegungen als Bewegungsereignisse in Schritt e.b. Die in Schritt e.a erfassten akustischen Signale werden in Schritt f.a gefiltert und erkannt und in Schritt f.b werden die erkannten Geräusche mit den Erkannten Bewegungsereignissen verknüpft. Darauf folgt eine Entscheidung in Schritt g über die Art der Veränderung der Bewertung durch die Verknüpfung in Schritt f.b. Je nach Ausgang der Entscheidung in Schritt g wird eine Veränderung der Bewertung vorgenommen, und zwar derart, dass das erkannte Bewegungsereignis zu einem Alarm h.a oder nicht zu einem Alarm h.b führt.

## Patentansprüche

1. Fahrerassistenzsystem zur Überwachung der Fahrsicherheit, aufweisend eine mobile elektronische Einheit (1) mit Videosensor (2), Rechnereinheit (5) zur Bilddatenverarbeitung und Ausgabeeinheit (3, 6), welche die unmittelbare Fahrzeugumgebung aus Daten des Videosensors (2) erfasst und eine Warnung oder einen Hinweis über die Ausgabeeinheit (3, 6) ausgibt, wenn die Rechnereinheit (5) eine Gefahrensituation detektiert, wobei die mobile elektronische Einheit (1) über eine akustische Eingabeeinheit (4) akustische Signale erfasst und diese Signale bei der Beurteilung der Fahrsicherheit einbezieht, **dadurch gekennzeichnet, dass** die akustischen Signale in einem Lernmodus bei der Nutzung des Fahrer assistenzsystems erfasst werden.

2. Fahrerassistenzsystem nach Anspruch 1, wobei die akustischen Signale ausgewählt sind aus der Gruppe bestehend aus: Blinkergeräusch, Motorgeräusch, akustische Warn- und/oder Hinweissignale des Fahrzeuges, Hupen des eigenen und/oder von fremden Fahrzeugen, Martinshörner.

3. Fahrerassistenzsystem nach einem der Ansprüche 1 oder 2, wobei die mobile elektronische Einheit (1) Verkehrszeichen (100, 101), insbesondere Geschwindigkeitsbegrenzungen und -aufhebungen, und/oder andere Verkehrsteilnehmer, insbesondere mit Blinklicht versehene oder besonders langsame und/oder ausscherende Fahrzeuge, erkennt und den Bedeutungsinhalt des erkannten Verkehrszeichens (10, 11) und/oder Verkehrsteilnehmer akustisch, insbesondere durch natürliche Sprache ausgibt.

4. Fahrerassistenzsystem nach einem der Ansprüche 1 bis 3, wobei die mobile elektronische Einheit (1) die Fahrzeuggeschwindigkeit aus den Daten des Videosensors (2) erfasst.

5. Fahrerassistenzsystem nach einem der Ansprüche 1 bis 4, wobei die mobile elektronische Einheit (1) eine optische Ausgabeeinheit (6) zur Darstellung von Bildern aufweist und die Warnung und/oder den Hinweis auf der Ausgabeeinheit (6) visualisiert.

6. Fahrerassistenzsystem nach einem der Ansprüche 1 bis 5, wobei die mobile elektronische Einheit (1) eine akustische Ausgabeeinheit (3) aufweist.

7. Fahrerassistenzsystem nach einem der Ansprüche 1 bis 6, wobei die mobile elektronische Einheit (1) Mittel (8) zur Navigation aufweist, und die ermittelte Position zur positiven oder negativen Detektion der Abweichung von der Verkehrsordnung einbezieht.

8. Fahrerassistenzsystem nach einem der Ansprüche 1 bis 7, wobei die mobile elektronische Einheit (1) die detektierten Abweichungen von der Verkehrsordnung in mehr als einer Kategorie klassifiziert und dass mehr als ein Betriebsmodus vorgesehen ist, wobei sich die Betriebsmodi darin unterscheiden, welche Abweichungen von der Verkehrsordnung durch Warnung und/oder Hinweis ausgeben werden.

9. Fahrerassistenzsystem nach einem der Ansprüche 1 bis 8, wobei die elektronische Einheit (1) die detektierten Abweichungen von der Verkehrsordnung in einer Statistik zusammenfasst.

10. Fahrerassistenzsystem nach einem der Ansprüche 1 bis 9, wobei eine Infrarotlasererkennung vorgesehen ist, die eine Geschwindigkeitserfassung anzeigt.

11. Fahrerassistenzsystem zum automatischen Erfassen und Bewerten einer Fahrzeugbewegung, ausgebildet, die folgenden Schritte auszuführen: Aufnehmen von Videodaten aus dem sich bewegenden Fahrzeug (a), Erkennen von vorgewählten, kontrastreichen Objekten in der unmittelbaren Fahrzeugumgebung (b), Vergleichen der Bewegungen mit vorausberechneten Bewegungen (c), die auf einer konstanten und linearen Fortbewegung des Fahrzeuges beruhen, Erkennen von Unterschieden zwischen den Bewegungen und vorausberechneten Bewegungen (d), Erfassen von akustischen Signalen aus der unmittelbaren Fahrzeugumgebung und/oder dem Fahrzeuginneren (e.a), Filtern und Erkennen von vorgewählten Geräuschen aus den akustischen Signalen (f.a). Bewerten der Unterschiede der Bewegungen als Bewegungsereignisse (e.b), Verknüpfen (f.b) der Bewertung mit den Ergebnissen der erkannten Geräusche, Entscheiden (g) über die Art der Veränderung und Verändern (h.a, h.b) einer Bewertung bei vorgewählten erkannten und bewerteten Ereignissen.

12. Verfahren zum automatischen Erfassen und Bewerten einer Fahrzeugbewegung, aufweisend die folgenden Schritte: Aufnehmen von Videodaten aus dem sich bewegenden Fahrzeug (a), Erkennen von vorgewählten, kontrastreichen Objekten in der unmittelbaren Fahrzeugumgebung (b), Vergleichen der Bewegungen mit vorausberechneten Bewegungen (c), die auf einer konstanten und linearen Fortbewegung des Fahrzeuges beruhen, Erkennen von Unterschieden zwischen den Bewegungen und vorausberechneten Bewegungen (d), Erfassen von akustischen Signalen aus der unmittelbaren Fahrzeugumgebung und/oder dem Fahrzeuginneren (e.a), Filtern und Erkennen von vorgewählten Geräuschen aus den akustischen Signalen (f.a), Bewerten der Unterschiede der Bewegungen als Bewegungsereignisse (e.b), Verknüpfen (f.b) der Bewertung mit den Ergebnissen der erkannten Geräusche, Entscheiden (g) über die Art der Veränderung und Verändern (h.a, h.b) einer Bewertung bei vorgewählten erkannten und bewerteten Ereignissen.

13. Verfahren nach Anspruch 12, aufweisend die zusätzlichen Schritte: Erfassen der aktuellen Fahrzeugposition aus Navigationsdaten und Vergleichen der ermittelten Position mit Daten in einer Datenbank (9), wobei die Daten aus der Datenbank (9) mit den erkannten Ereignissen und den Ergebnissen der erkannten Geräusche verknüpft werden.

14. Verfahren nach einem der Ansprüche 12 oder 13, aufweisend die zusätzlichen Schritte: Erfassen des aktuellen Abstandes und der Näherungsgeschwindigkeit zu anderen Fahrzeugen, wobei der Abstand und die Näherungsgeschwindigkeit mit den erkannten Ereignissen und den Ergebnissen der erkannten Geräusche verknüpft werden.

15. Verfahren nach einem der Ansprüche 12 bis 14, aufweisend die zusätzlichen Schritte: Vergleichen der kontrastreichen Objekte mit internen Repräsentationen von gespeicherten Straßenschildern, wobei die Ergebnisse dieses Vergleiches mit den erkannten Ereignissen und den Ergebnissen der erkannten Geräusche verknüpft werden.

## Claims

1. Driver assistance system for monitoring driving safety, having a mobile electronic unit (1) with a video sensor (2), computer unit (5) for processing image data and output unit (3, 6), which mobile electronic unit senses the immediate surroundings of the vehicle from data of the video sensor (2) and outputs a warning or an instruction via the output unit (3, 6) if the computer unit (5) detects a hazardous situation, wherein the mobile electronic unit (1) senses acoustic signals via an acoustic input unit (4) and includes these signals in the assessment of the driving safety, **characterized in that** the acoustic signals are sensed in a learning mode during the use of the driver assistance system.

2. Driver assistance system according to Claim 1, wherein the acoustic signals are selected from the group comprising: flashing indicator light noise, engine noise, acoustic warning signals and/or instruction signals of the vehicle, sounding of the horn of the driver's own vehicle and/or of other vehicles, sirens.

3. Driver assistance system according to either of Claims 1 and 2, wherein the mobile electronic unit (1) detects road signs (100, 101), in particular speed limits and cancellations of speed limits, and/or other road users, in particular vehicles which are provided with a flashing light or particularly slow vehicles and/or vehicles which are cutting out, and outputs the information content of the detected road sign (10, 11), and/or road users acoustically, in particular by means of natural language.

4. Driver assistance system according to one of Claims 1 to 3, wherein the mobile electronic unit (1) senses the vehicle speed from the data of the video sensor (2).

5. Driver assistance system according to one of Claims 1 to 4, wherein the mobile electronic unit (1) has an optical output unit (6) for displaying images, and presents the warning and/or the instruction in visual form on the output unit (6).

6. Driver assistance system according to one of Claims 1 to 5, wherein the mobile electronic unit (1) has an acoustic output unit (3).

7. Driver assistance system according to one of Claims 1 to 6, wherein the mobile electronic unit (1) has means (8) for navigation and includes the determined position for the positive or negative detection of deviation from the traffic regulations.

8. Driver assistance system according to one of Claims 1 to 7, wherein the mobile electronic unit (1) classifies the detected deviations from the traffic regulations into more than one category, and more than one operating mode is provided, wherein the operating modes differ as to which deviations from the traffic regulations are output via warning and/or instruction.

9. Driver assistance system according to one of Claims 1 to 8, wherein the electronic unit (1) compiles the detected deviations from the traffic regulations in a statistic.

10. Driver assistance system according to one of Claims 1 to 9, wherein an infrared laser detection means is provided which displays the sensing of a speed.

11. Driver assistance system for automatically sensing and evaluating a vehicle movement, designed to carry out the following steps: recording of video data from the moving vehicle (a), detection of preselected, contrast-rich objects in the immediate surroundings of the vehicle (b), comparison of the movements with movements which are calculated in advance (c) which are due to a constant and linear locomotion of the vehicle, detection of differences between the movements and movements calculated in advance (d), sensing of acoustic signals from the immediate surroundings of the vehicle and/or the interior of the vehicle (e.a), filtering and detection of preselected noise from the acoustic signals (f.a), evaluation of the differences between the movements as movement events (e.b), linking (f.b) of the evaluation with the results of the detected noise, deciding (g) about the type of change, and changing (h.a, h.b) an evaluation in the case of preselected detected and evaluated events.

12. Method for automatically sensing and evaluating a vehicle movement, having the following steps: recording of video data from the moving vehicle (a), detection of preselected, contrast-rich objects in the immediate surroundings of the vehicle (b), comparison of the movements with movements which are calculated in advance (c) and which are due to a constant and linear locomotion of the vehicle, detection of differences between the movements and movements calculated in advance (d), sensing of acoustic signals from the immediate surroundings of the vehicle and/or the interior of the vehicle (e.a), filtering and detection of preselected noise from the acoustic signals (f.a), evaluation of the differences between the movements as movement events (e.b), linking (f.b) of the evaluation with the results of the detected noise, deciding (g) about the type of change, and changing (h.a, h.b) an evaluation in the case of preselected detected and evaluated events.

13. Method according to Claim 12, having the additional steps: sensing of the current vehicle position from navigation data and comparison of the determined position with data in a database (9), wherein the data from the database (9) are linked to the detected events and the results of the detected noise.

14. Method according to either of Claims 12 and 13, having the additional steps: sensing of the current distance and the speed of approach to other vehicles, wherein the distance and the speed of approach are linked to the detected events and the results of the detected noise.

15. Method according to one of Claims 12 to 14, having the additional steps: comparison of the contrast-rich objects with internal representations of stored road signs, wherein the results of this comparison are linked to the detected events and the results of the detected noise.

## Revendications

1. Système d'assistance du conducteur pour surveiller la sécurité de conduite, présentant une unité électronique mobile (1) munie d'un capteur vidéo (2), une unité de calcul (5) pour le traitement des données d'image et une unité de sortie (3, 6) qui capte l'environnement immédiat du véhicule à partir des données du capteur vidéo (2) et délivre un avertissement ou une notification par le biais de l'unité de sortie (3, 6) lorsque l'unité de calcul (5) détecte une situation de danger, l'unité électronique mobile (1) captant des signaux sonores par le biais d'une unité d'entrée sonore (4) et faisant intervenir ces signaux lors de l'évaluation de la sécurité de conduite, **caractérisé en ce que** les signaux sonores sont captés dans un mode d'apprentissage lors de l'utilisation du système d'assistance du conducteur.

2. Système d'assistance du conducteur selon la revendication 1, dans lequel les signaux sonores sont sélectionnés parmi le groupe composé de : bruit d'indicateur de changement de direction, bruit de moteur, signaux sonores d'alerte et/ou de notification du véhicule, klaxons du véhicule propre et/ou d'autres véhicules, sirènes.

3. Système d'assistance du conducteur selon l'une des revendications 1 ou 2, dans lequel l'unité électronique mobile (1) reconnaît les panneaux de circulation (100, 101), notamment les limitations et fins de limitation de vitesse, et/ou les autres acteurs du trafic, notamment les véhicules munis de feux clignotants ou encore les véhicules particulièrement lents et/ou en train de dépasser, et délivre sous forme sonore, notamment par la voix naturelle, le contenu de la signification du panneau de circulation (10, 11) reconnu et/ou des acteurs du trafic.

4. Système d'assistance du conducteur selon l'une des revendications 1 à 3, dans lequel l'unité électronique mobile (1) capte la vitesse du véhicule à partir des données du capteur vidéo (2).

5. Système d'assistance du conducteur selon l'une des revendications 1 à 4, dans lequel l'unité électronique mobile (1) présente une unité de sortie optique (6) pour représenter des images et visualise l'avertissement et/ou la notification sur l'unité de sortie (6).

6. Système d'assistance du conducteur selon l'une des revendications 1 à 5, dans lequel l'unité électronique mobile (1) présente une unité de sortie sonore (3).

7. Système d'assistance du conducteur selon l'une des revendications 1 à 6, dans lequel l'unité électronique mobile (1) présente des moyens (8) de navigation et fait intervenir la position déterminée pour la détection positive ou négative de l'écart par rapport au code de la route.

8. Système d'assistance du conducteur selon l'une des revendications 1 à 7, dans lequel l'unité électronique mobile (1) classifie les écarts détectés par rapport au code de la route en plus d'une catégorie et en ce que plus d'un mode de fonctionnement est prévu, les modes de fonctionnement se différenciant par les écarts par rapport au code de la route qui sont délivrés par un avertissement et/ou une notification.

9. Système d'assistance du conducteur selon l'une des revendications 1 à 8, dans lequel l'unité électronique (1) regroupe les écarts détectés par rapport au code de la route dans une statistique.

10. Système d'assistance du conducteur selon l'une des revendications 1 à 9, dans lequel il est prévu une reconnaissance par laser à infrarouge qui indique une détection de la vitesse.

11. Système d'assistance du conducteur pour capter et évaluer automatiquement le déplacement d'un véhicule, configuré pour exécuter les étapes suivantes : enregistrement de données vidéo depuis le véhicule qui se déplace (a), reconnaissance d'objets très contrastés présélectionnés dans l'environnement immédiat du véhicule (b), comparaison des déplacements avec des déplacements calculés à l'avance (c) qui se basent sur un déplacement progressif constant et linéaire du véhicule, reconnaissance de différences entre les déplacements et les déplacements calculés à l'avance (d), captage de signaux sonores provenant de l'environnement immédiat du véhicule et/ou de l'intérieur du véhicule (e.a), filtrage et reconnaissance de bruits présélectionnés à partir des signaux sonores (f.a), évaluation des différences entre les déplacements en tant qu'événements de déplacement (e.b), combinaison (f.b) de l'évaluation avec les résultats des bruits reconnus, décision (g) relative à la nature de la modification et modification (h.a, h.b) d'une évaluation en présence d'événements présélectionnés reconnus et évalués.

12. Procédé pour capter et évaluer automatiquement le déplacement d'un véhicule, présentant les étapes suivantes : enregistrement de données vidéo depuis le véhicule qui se déplace (a), reconnaissance d'objets très contrastés présélectionnés dans l'environnement immédiat du véhicule (b), comparaison des déplacements avec des déplacements calculés à l'avance (c) qui se basent sur un déplacement progressif constant et linéaire du véhicule, reconnaissance de différences entre les déplacements et les déplacements calculés à l'avance (d), captage de signaux sonores provenant de l'environnement immédiat du véhicule et/ou de l'intérieur du véhicule (e.a), filtrage et reconnaissance de bruits présélectionnés à partir des signaux sonores (f.a), évaluation des différences entre les déplacements en tant qu'événements de déplacement (e.b), combinaison (f.b) de l'évaluation avec les résultats des bruits reconnus, décision (g) relative à la nature de la modification et modification (h.a, h.b) d'une évaluation en présence d'événements présélectionnés reconnus et évalués.

13. Procédé selon la revendication 12, présentant l'étape supplémentaire suivante : captage de la position actuelle du véhicule à partir de données de navigation et comparaison de la position déterminée avec des données dans une base de données (9), les données de la base de données (9) étant combinées avec les événements reconnus et les résultats des bruits reconnus.

14. Procédé selon l'une des revendications 12 ou 13, présentant l'étape supplémentaire suivante : captage de l'écart actuel et de la vitesse de rapprochement vers d'autres véhicules, l'écart et la vitesse de rapprochement étant combinés avec les événements reconnus et les résultats des bruits reconnus.

15. Procédé selon l'une des revendications 12 à 14, présentant l'étape supplémentaire suivants : comparaison des objets très contrastés avec des représentations internes de panneaux routiers mémorisés, les résultats de cette comparaison étant combinés avec les événements reconnus et les résultats des bruits reconnus.
